# EUROPÄISCHE PATENTSCHRIFT

(11) **EP 3 071 807 B1**
(45) Veröffentlichungstag und Bekanntmachung des Hinweises auf die Patenterteilung: **10.01.2018**
(21) Anmeldenummer: 14799390.1
(22) Anmeldetag: 12.11.2014
(51) Int. Cl.: B01F 5/04, B01F 3/04, F01N 3/28, F01N 13/18, B01F 5/06, F01N 3/20, B01F 5/02

(54) **ABGASNACHBEHANDLUNGSEINRICHTUNG**
EXHAUST GAS TREATMENT DEVICE
DISPOSITIF DE POST-TRAITEMENT DE GAZ D'ÉCHAPPEMENT

(30) Priorität: 22.11.2013 DE 102013223956
(43) Veröffentlichungstag der Anmeldung: 28.09.2016
(73) Patentinhaber: Robert Bosch GmbH, 70442 Stuttgart (DE)
(72) Erfinder: KLOECKNER, Siegurd, 50939 Köln (DE); ALT, Christian, 70469 Stuttgart (DE)
(86) Internationale Anmeldenummer: PCT/EP2014/074355
(87) Internationale Veröffentlichungsnummer: WO 2015/074926

(56) Entgegenhaltungen:
- EP-A2- 2 006 017
- DE-A1-102008 029 110
- DE-A1-102008 042 536
- FR-A1- 2 929 326
- US-A1- 2007 205 523

## Beschreibung

Die Erfindung betrifft eine Einrichtung, insbesondere Abgasnachbehandlungseinrichtung, mit einem Rohr, insbesondere Abgasrohr, durch welches ein Gasstrom, insbesondere Abgas einer Brennkraftmaschine, geführt wird, mit einer dem Rohr zugeordneten Einspritzeinrichtung zum dosierten Einspritzen eines flüssigen Mediums, insbesondere Abgasnachbehandlungsmittel, in den Gasstrom, wobei die Einspritzeinrichtung an einer Mantelwand des Rohrs derart angeordnet ist, dass eine Einspritzrichtung der Einspritzeinrichtung schräg bezüglich der Längsachse des Rohrs ausgerichtet ist, und mit mindestens einer Mischvorrichtung, die stromabwärts der Einspritzeinrichtung in dem Rohr angeordnet ist und mehrere in einer Ebene angeordnete, flügelartig ausgebildete Luftleitelemente aufweist.

### Stand der Technik

Einrichtungen der eingangs genannten Art sind aus dem Stand der Technik bereits bekannt. Zur Verminderung der im Abgas einer Brennkraftmaschine enthaltenen Stickoxide hat sich ein Verfahren zur selektiven katalytischen Reduktion ("SCR") bewährt. Bei diesem Verfahren werden Stickoxide zusammen mit Ammoniak in einem selektiven Katalysator zu Stickstoff und Wasser umgesetzt. Das zur katalytischen Umsetzung der Stickoxide notwendige Reduktionsmittel wird anstelle des Ammoniaks in Form einer wässrigen Harnstofflösung in einem Vorratstank im Fahrzeug mitgeführt, und mittels einer Einspritzeinrichtung in das Abgas der Brennkraftmaschine eingespritzt wird, um stromabwärts in einem Katalysator die gewünschte Reaktion mit dem Abgas durchzuführen. Zur besseren Vermischung des Abgases mit dem Abgasnachbehandlungsmittel ist es weiterhin bekannt, stromabwärts der Dosiereinrichtung eine Mischvorrichtung mit mehreren Luftleitelementen vorzusehen, die als statischer Mischer die Vermischung des Abgasnachbehandlungsmittels mit dem Abgas begünstigt. Eine entsprechende Vorrichtung ist beispielsweise aus der DE 10 2006 011 890 A1 bekannt. Auch die DE 100 60 808 A1 zeigt eine entsprechende Mischvorrichtung, die jedoch stromaufwärts der Dosiereinrichtung angeordnet ist.

Aus der Offenlegungsschrift EP 2 006 017 A2 ist bereits eine Einrichtur bekannt, mit einer Mischvorrichtung, die an dem Abgasrohr angeordnet einer Einspritzeinrichtung, die an einer Biegung des Abgasrohrs derart angeordnet ist, dass ihre Einspritzrichtung parallel zur Längsachse des R beziehungsweise in Richtung der Längsmittelachse des Rohrs ausgericht

Aus der Offenlegungsschrift FR 2 929 326 A1 ist weiterhin bereits eine Einrichtung bekannt, bei welcher eine Einspritzeinrichtung an der Mantelwan eines Abgasrohrs angeordnet ist, wobei eine Einspritzrichtung der Einspritzeinrichtung senkrecht zur Längserstreckung des Abgasrohrs ausgerichtet ist, sodass das eingespritzte Medium erst durch den Abgasstrom Richtung einer stromabwärts liegenden Mischvorrichtung gelenkt wird.

Aus der Offenlegungsschrift DE 10 2008 029 110 A1 ist außerdem eine Misch- und/oder Verdampfungseinrichtung mit mehreren in einer Ebene angeordneten Luftleitlamellen bekannt. Aus der Offenlegungsschrift US 2007/0205523 A1 ist eine weitere Mischvorrichtung mit einer Vielzahl von Luftleitlamellen bekannt, die in einer Ebene senkrecht zur Längserstreckung eines Rohrs angeordnet sind.

Die Offenlegungsschrift DE 10 2008 042 536 A1 zeigt eine Einrichtung, mit einer Einspritzeinrichtung, die an einer Mantelwand eines Abgasrohrs angeordnet ist und schräg zur Längserstreckung des Rohrs ein Abgasnachbehandlungsmittel in das Rohr einspritzt. Stromabwärts der Einspritzstelle ist eine Vorrichtung angeordnet, die Streben aufweist, welche sich senkrecht zur Längserstreckung des Abgasrohrs erstrecken und in unterschiedlichen Ebenen angeordnet sind. Die Streben sind dabei mittig durch einen kreisförmigen Teller miteinander verbunden, in welchem Luftleitelemente ausgebildet sind, welche das eingespritzte Nachbehandlungsmittel in Strömungsrichtung des Abgasstroms lenken.

### Offenbarung der Erfindung

Die erfindungsgemäße Einrichtung mit den Merkmalen des Anspruchs 1 hat den Vorteil, dass das flüssige Medium beziehungsweise das Abgasnachbehandlungsmittel noch besser mit dem Gasstrom vermengt wird, so dass insbesondere ein Aufbrechen größerer Tropen in kleine Tropfen, die zu einer besseren Verdampfung des Abgasnachbehandlungsmittels im Abgas führen, gewährleistet ist. Außerdem wird durch die erfindungsgemäße Ausbildung vermieden, dass Tropfen auf der der Dosiereinrichtung gegenüberliegenden Seite der Mantelwand des Rohrs beziehungsweise Abgasrohres verbleiben und zu einer kristallinen Ablagerung führen. Die erfindungsgemäße Einrichtung zeichnet sich dadurch aus, dass die Ebene, in welcher die Luftleitelemente angeordnet sind, zumindest im Wesentlichen senkrecht zu einer Einspritzrichtung der Einspritzeinrichtung ausgerichtet ist. Die Einspritzeinrichtung weist üblicherweise eine Haupteinspritzeinrichtung beziehungsweise eine Einspritzachse auf, um welche sich ein Einspritzkegel des eingespritzten Abgasnachbehandlungsmittels formt. Durch die Ausrichtung der Ebene, in welcher die Luftleitelemente angeordnet sind, senkrecht zu dieser Einspritzrichtung wird erreicht, dass die Auftrefffläche für das eingespritzte Medium gegenüber einer konventionellen Mischvorrichtung vergrößert wird. Dadurch erfolgt ein vermehrter Aufbruch von großen auf die Luftleitelemente auftreffenden Tropfen in kleinere Tropfen. Infolgedessen kommt es zu einer Erhöhung der Verdampfungsrate des flüssigen Mediums und damit zu einer besseren Durchmischung des eingebrachten Mediums mit dem Gasstrom. Gleichzeitig wird die Menge an Tropfen, die die Mischvorrichtung, ohne mit dieser in Kontakt getreten zu sein, passieren, verringert. Außerdem treffen weniger Tropfen auf die der Einspritzeinrichtung gegenüberliegende Seite der Mantelwand des Rohrs, da sich die Luftleitelemente durch die im Abgasrohr schräge Ausrichtung der Ebene auch in diesen Bereich hinein erstrecken. Dadurch wird die Gefahr von kristallinen Ablagerungen verringert und die Lebensdauer der Einrichtung beziehungsweise Abgasnachbehandlungseinrichtung erhöht. Vorzugsweise weist die Mantelwand des Rohrs zumindest auf der der Dosiereinrichtung gegenüberliegenden Seite eine erhöhte Oberflächenrauigkeit auf, die zu einer Verminderung oder Vermeidung kristalliner Ablagerungen beiträgt.

Erfindungsgemäß ist vorgesehen, dass die Luftleitelemente flügelartig ausgebildet und zumindest im Wesentlichen radial ausgerichtet über den Umfang des Rohrs verteilt angerordnet sind. In einer Draufsicht beziehungsweise in Strömungsrichtung auf die Mischvorrichtung gesehen weist die Mischvorrichtung somit eine propellerartige Struktur auf. Durch die radial ausgerichteten Luftleitelemente ergibt sich eine vorteilhafte Vermischung des Abgasnachbehandlungsmittels mit dem Abgas, die zu entsprechenden Vorteilen bei der Abgasnachbehandlung führt.

Weiterhin ist bevorzugt vorgesehen, dass die Luftleitelemente zumindest im Wesentlichen schräg bezüglich der Strömungsrichtung des Gasstroms in dem Rohr stromaufwärts der Mischvorrichtung ausgerichtet sind. Hierdurch erfolgt in Zusammenhang mit der radialen Anordnung das Einbringen eines Dralls in das Abgas, wodurch die Vermischung weiter optimiert wird.

Vorzugsweise sind die Luftleitelemente entlang ihrer jeweiligen zumindest im Wesentlichen radial ausgerichteten Längsachse in sich verwunden. Dadurch werden unterschiedliche Auftreffwinkel an dem jeweiligen Luftleitelement geboten, wobei der Auftreffwinkeln in Abhängigkeit der radialen Position im Rohr durch das Verwinden optimal auf den Gasstrom einstellbar ist.

Gemäß einer vorteilhaften Weiterbildung der Erfindung ist vorgesehen, dass die Luftleitelemente einen radialen Abstand zu der Mantelwand des Rohrs aufweisen. Hierdurch entsteht eine thermische Entkopplung von den Luftleitelementen zu der Mantelwand des Rohrs, wobei der verbleibende Spalt von dem Gasstrom durchströmt wird. Hierdurch wird erreicht, dass die Luftleitelemente im Betrieb permanent durch den Abgasstrom beheizt werden, ohne dass die eingebrachte Wärme über die Mantelwand des Rohrs wieder abgeführt wird. Vorzugsweise sind einige, besonderes bevorzugt alle Luftleitelemente radial beabstandet zu der Mantelwand des Rohrs angeordnet, so dass sich ein ringförmiger Spalt zwischen den Luftleitelementen und der Mantelwand ergibt. Durch die permanente Beheizung und die geringe Wärmeabfuhr wird das Mischverhalten, insbesondere das Aufbrechen und Verdampfen der Tropfen weiter optimiert.

Weiterhin ist gemäß einer bevorzugten Ausführungsform vorgesehen, dass die Luftleitelemente an einem zumindest im Wesentlichen mittig in dem Rohr angeordneten Stützelement angeordnet sind. Durch die Anordnung und insbesondere Befestigung der Luftleitelemente an diesem mittig angeordneten Stützelement lässt sich beispielsweise der oben beschriebene radiale Abstand zur Mantelwand auf einfache Art und Weise realisieren.

Vorzugsweise ist das Stützelement als Rohrelement ausgebildet, an dessen Rohrwand die Luftleitelemente nach innen ragend angeordnet sind. Gemäß dieser Ausführungsform ist also vorgesehen, dass die Luftleitelemente außen mit dem Rohrelement verbunden sind, wobei die nach innen weisenden Enden der Luftleitelemente vorzugsweise frei stehend ausgebildet sind, oder alternativ miteinander verbunden sind. Besonders bevorzugt ist hierbei vorgesehen, dass der Durchmesser des Rohrelementes derart kleiner als der Durchmesser des Abgasrohres gewählt ist, dass zwischen diesen beiden ein ringförmiger Spalt verbleibt, durch welchen das Abgas im Betrieb permanent strömt, was zu den oben bereits genannten Vorteilen bezüglich der permanenten Beheizung der Mischvorrichtung führt. Vorzugsweise weist das Rohrelement dabei radial nach außen ragende Abstandhalter auf, die beispielsweise einstückig mit dem Rohrelement ausgebildet sein können, und die Positionierung des Rohrelementes in dem Rohr gewährleisten.

Gemäß einer alternativen Ausführungsform der Erfindung ist vorgesehen, dass das Stützelement als Rohrelement ausgebildet ist, an dessen Mantelwand die Luftleitelemente nach außen in Richtung der Mantelwand des Abgasrohres weisend angeordnet sind. Dabei weist das Rohrelement einen im Verhältnis zu dem Durchmesser des Abgasrohres sehr kleinen Durchmesser auf. Das Rohrelement wird dabei bevorzugt von einem Stützelement getragen, das vorzugsweise senkrecht in das Abgasrohr hineinragt und stromabwärts der Luftleitelemente angeordnet ist.

Gemäß einer bevorzugten Weiterbildung der Erfindung ist vorgesehen, dass die Luftleitelemente einstückig mit dem Rohrelement ausgebildet sind. Bei einer bevorzugten Fertigung des Rohrelementes beziehungsweise einer Mischvorrichtung aus einem flächigen Stanzteil, können Luftleitelemente durch ein Verbiegen in die erfindungsgemäß gewünschte Position und Ausrichtung verbracht werden, wodurch sich geringe Herstellungskosten und eine einfache Montage ergeben. Das Rohrelement selbst kann dabei passgenau in das Rohr eingesteckt sein, und vorzugsweise unter Bildung einer Presspassung oder durch separate Haltemittel in dem Rohr angeordnet gehalten sein.

Weiterhin ist bevorzugt vorgesehen, dass wenigstens zwei Mischvorrichtungen in Strömungsrichtung hintereinander liegend in dem Abgasrohr stromabwärts der Einspritzeinrichtung angeordnet sind. Dabei ist zumindest die stromaufwärts liegende Mischvorrichtung erfindungsgemäß ausgebildet. Die Luftleitelemente der zweiten Mischvorrichtung sind gemäß einer ersten Ausführungsform bevorzugt in einer Ebene parallel zu der Ebene der stromaufwärts liegenden Mischvorrichtung angeordnet. Alternativ ist bevorzugt vorgesehen, dass die Luftleitelemente der stromabwärts angeordneten Mischvorrichtung in einem weniger steilen und eher achsparallelen Winkel zu dem Rohr angeordnet sind. Besonders bevorzugt liegen die Luftleitelemente der stromabwärts angeordneten Mischvorrichtung in einer Ebene, die senkrecht zur Mittelachse des Abgasrohrs ausgerichtet ist. Durch das Vorsehen von zwei Mischvorrichtungen beziehungsweise des zweistufigen Mischers wird die Gefahr von kristallinen Ablagerungen weiter verringert, weil durch den mindestens zweistufigen Mischer noch mehr Tropfen daran gehindert werden, die der Dosiereinrichtung gegenüberliegende Seite der Mantelwand des Rohres zu treffen.

Im Folgenden soll die Erfindung anhand von Ausführungsbeispielen näher erläutert werden. Dazu zeigen:
- Figur 1: eine Abgasnachbehandlungseinrichtung in einer vereinfachten Schnittdarstellung,
- Figur 2: eine Mischvorrichtung der Abgasnachbehandlungseinrichtung in einer perspektivischen Darstellung,
- Figur 3: eine Seitenansicht der Mischvorrichtung,
- Figur 4: eine Draufsicht auf ein zweites Ausführungsbeispiel der Mischvorrichtung in einer Draufsicht,
- Figur 5: ein drittes Ausführungsbeispiel der Mischvorrichtung in einer Draufsicht,
- Figur 6: eine Detailansicht der Mischvorrichtung aus Figur 5, und
- Figur 7: die Abgasnachbehandlungseinrichtung mit zwei Mischvorrichtungen in einer vereinfachten Schnittdarstellung.

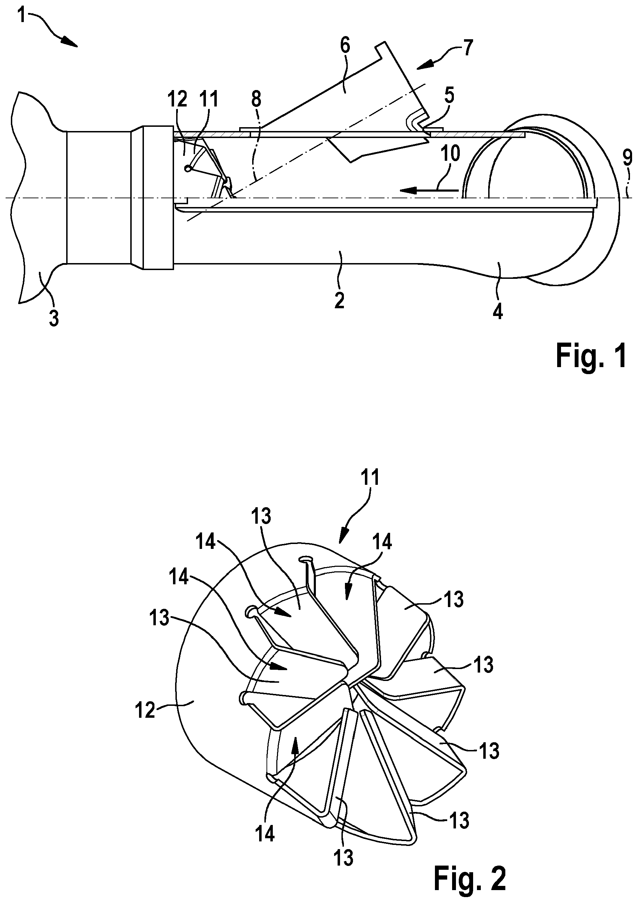

Figur 1 zeigt in einer vereinfachten Seitenansicht eine Abgasnachbehandlungseinrichtung 1 für die Brennkraftmaschine eines Kraftfahrzeugs. Die Abgasnachbehandlungseinrichtung 1 weist ein Abgasrohr 2 auf, durch welches Abgas von der Brennkraftmaschine zu einem Katalysator 3 geführt wird. Das Abgasrohr 2 ist hierbei aufgeschnitten dargestellt. An seiner in der Zeichnung oben liegenden Seite der Mantelwand 4 des Abgasrohrs 2 weist das Abgasrohr 2 eine Öffnung 5 auf, die von einem Flansch 6 einer hier nicht näher dargestellten Einspritzeinrichtung 7 überdeckt ist. Die Einspritzeinrichtung 7 weist eine Einspritzrichtung auf, die durch eine Achse 8 in Figur 1 angedeutet ist. Die Achse ist schräg bezüglich der Längsachse 9 des Abgasrohrs 2 ausgerichtet, so dass durch die Einspritzeinrichtung 7 eingespritztes Abgasnachbehandlungsmittel, insbesondere eine wässrige Harnstofflösung, in Strömungsrichtung des Abgases, wie durch einen Pfeil 10 angedeutet, schräg in das Abgasrohr 2 eingespritzt wird.

In dem Abgasrohr 2 ist stromabwärts der Einspritzeinrichtung 7 außerdem eine Mischvorrichtung 11 angeordnet, die dazu dient, die Strömung des Abgases sowie des eingespritzten Abgasnachbehandlungsmittels derart zu beeinflussen, dass das Abgas und das Abgasnachbehandlungsmittel vorteilhaft und optimal miteinander vermischt beziehungsweise vermengt werden, um in dem weiter stromabwärts liegenden Katalysator 3 eine gewünschte Reaktion durchführen zu können.

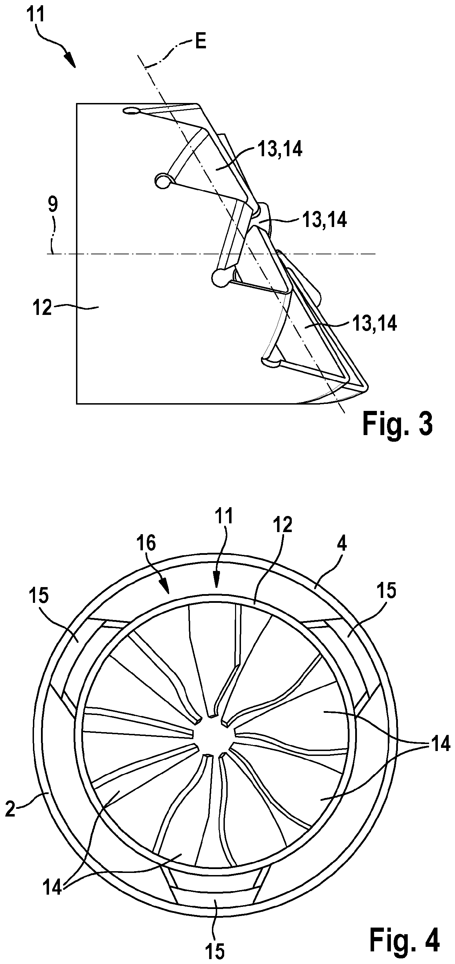

Die Figuren 2 und 3 zeigen ein erstes Ausführungsbeispiel der Mischvorrichtung 11 in einer perspektivischen Darstellung (Figur 2) und in einer Seitenansicht (Figur 3). Die Mischvorrichtung 11 weist ein Rohrelement 12 auf, dessen Außendurchmesser zumindest im Wesentlichen dem Innendurchmesser des Abgasrohrs 2 entspricht. Besonders bevorzugt sind die Durchmesser derart gewählt, dass zwischen dem Rohrelement 12 und dem Abgasrohr 2 eine Presspassung gebildet ist. Das Rohrelement 12 ist aus einem flächigen Stanzteil geformt. An seiner der Einspritzeinrichtung 7 zugewandten Stirnseite weist das Rohrelement 12 mehrere über den Umfang gleichmäßig verteilt angeordnete Laschen 13 auf, die jeweils radial nach innen gebogen sind und vorliegend jeweils die gleiche Länge aufweisen. Dabei sind die Biegestellen der Laschen derart angeordnet, dass die Laschen in einer Ebene E angeordnet sind, die schräg zur Achse 9 und insbesondere senkrecht zur Achse 8, also senkrecht zur Einspritzrichtung der Einspritzeinrichtung 7 ausgerichtet ist. Die Laschen 13 sind beabstandet zueinander angeordnet und flügelartig ausgebildet, so dass sie Luftleitelemente 14 bilden. Wobei die in dem Abgasrohr weiter in Strömungsrichtung vorne liegenden Laschen 13 sowie die in Strömungsrichtung etwas weiter hinten liegenden Laschen 13 vorzugsweise etwas länger ausgebildet sind, als die auf halber Höhe angeordneten Laschen 13, so dass die Laschen 13 mittig im Wesentlichen an ihren Spritzen den gleichen Abstand zueinander aufweisen.

Dadurch, dass die Luftleitelemente 14 alle in der Ebene E angeordnet sind, wird erreicht, dass die Auftrefffläche für das eingespritzte Abgasnachbehandlungsmittel im Vergleich zu herkömmlichen Mischvorrichtungen größer ausfällt und dadurch ein vermehrter Aufbruch von großen Tropfen in kleinere Tropfen erfolgt. Dadurch wird auch die Verdampfungsrate erhöht, die Durchmischung des Abgasnachbehandlungsmittels mit dem Abgasstrom verbessert. Durch die schräge Ausrichtung der Ebene E wird außerdem erreicht, dass weniger Tropfen auf die der Einspritzeinrichtung 7 gegenüberliegende Seite der Mantelwand 4 treffen, dort verbleiben und zu kristallinen Ablagerungen führen können.

Figur 4 zeigt ein zweites Ausführungsbeispiel der Mischvorrichtung 11 in einer Draufsicht. Auch hier sind die Luftleitelemente 14 flügelartig ausgebildet und mit dem Rohrelement 12 radial außen verbunden. Dabei kann auch vorgesehen sein, dass die Luftleitelemente 14, wie zuvor beschrieben, einstückig mit dem Rohrelement ausgebildet sind. Während bei dem ersten Ausführungsbeispiel eine flächige Anlage des Rohrelementes 12 mit dem Abgasrohr 2 vorgesehen ist, ist gemäß dem Ausführungsbeispiel von Figur 4 vorgesehen, dass das Rohrelement 12 mehrere über den Umfang verteilt angeordnete Abstandshalter 15 aufweist, die radial nach außen vorstehen, um einen definierten Abstand zwischen dem Rohrelement 12 und dem Abgasrohr 2 beziehungsweise dessen Mantelwand 4 einzustellen. Zweckmäßigerweise sind mindestens drei der Abstandshalter 15 vorgesehen. Besonders bevorzugt sind die Abstandhalter 15 ebenfalls einstückig mit dem Rohrelement 12 ausgebildet und beispielsweise als herausgebogene Blechzungen ausgebildet. Durch die Abstandshalter 15 wird ein ringförmiger Spalt 16 zwischen dem Rohrelement 12 und dem Abgasrohr 4 in radialer Richtung eingestellt, der ständig im Betrieb von dem heißen Abgas der Brennkraftmaschine durchströmt wird. Da das Rohrelement 12 im Wesentlichen thermisch von der Mantelwand 4 des Abgasrohrs 2 entkoppelt ist, wird einmal in die Mischvorrichtung 11 eingebrachte Wärme nicht ohne Weiteres an das Abgasrohr 2 abgeführt. Die Mischvorrichtung 11 wird somit permanent beheizt und führt zu einer noch besseren Verdampfung des eingespritzten Abgasnachbehandlungsmittels.

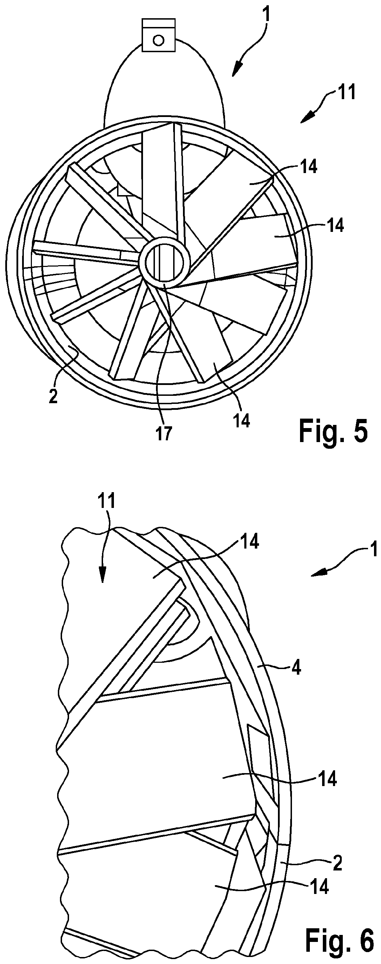

Figur 5 zeigt ein drittes Ausführungsbeispiel der Mischvorrichtung 11, das sich von den vorhergehenden Ausführungsbeispielen im Wesentlichen nur dadurch unterscheidet, dass die Luftleitelemente 14 nicht radial außen, sondern radial innen an einem Stützelement 17, das vorliegend als Rohrelement ausgebildet ist, gehalten sind. Dabei erstrecken sich die Luftleitelemente 14 derart weit radial nach außen, dass ein Spalt zwischen dem Luftleitelement 14 und der Mantelwand 4 des Abgasrohrs 2 verbleibt, um die zuvor beschriebene Wirkung der thermischen Entkopplung zu erreichen.

Figur 6 zeigt eine vergrößerte Detailansicht der Mischvorrichtung 11 aus Figur 5, in welcher der Spalt zwischen Mantelwand 4 und dem Luftleitelement 14 zu erkennen ist.

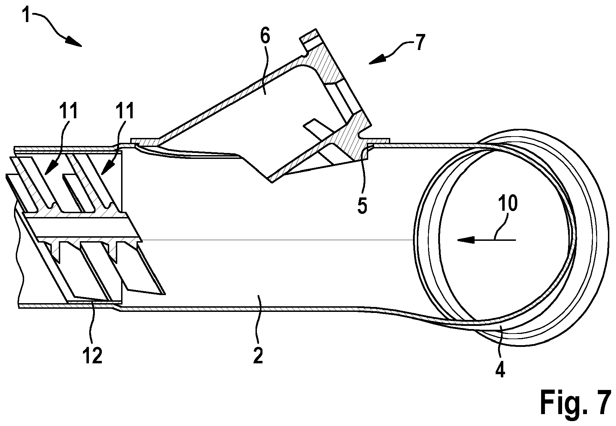

Figur 6 zeigt außerdem eine optionale Weiterbildung der Abgasnachbehandlungseinrichtung 1 dahingehend, dass zwei Mischvorrichtungen 11 hintereinanderliegend in dem Abgasrohr 2 angeordnet sind. Dadurch liegen in zwei voneinander beabstandeten Ebenen die Luftleitelemente 14 von zwei Mischvorrichtungen 11 in dem Abgasrohr 2, wie in Figur 6 gezeigt. Zumindest die Ebene der stromaufwärts liegenden Mischvorrichtung ist dabei wie zuvor beschrieben senkrecht zur Einspritzrichtung der Einspritzeinrichtung 7 ausgerichtet. Die Ebene, in welcher die Luftleitelemente der stromabwärts liegenden Mischeinrichtung angeordnet sind, kann parallel zu der Ebene der stromaufwärts angeordneten Mischvorrichtung liegen, wie in Figur 7 gezeigt, oder auch beispielsweise senkrecht zur Längsachse 9 des Abgasrohrs 2. Selbstverständlich können auch noch weitere Mischvorrichtungen entsprechend angeordnet vorgesehen sein.

Die Figur 7 zeigt im Wesentlichen die aus Figur 1 bereits bekannte Abgasnachbehandlungseinrichtung in einer weiteren Längsschnittdarstellung. Im Unterschied zu dem Ausführungsbeispiel von Figur 1 ist nunmehr vorgesehen, dass zwei Mischvorrichtungen 11 - wie zu Figur 6 bereits erwähnt - hintereinander liegend in dem Rohr beziehungsweise Abgasrohr 2 angeordnet sind. Es ergeben sich hierdurch die bereits genannten Vorteile. Die beiden Mischvorrichtungen 11 sind dabei in einem gemeinsamen Rohrelement 12 angeordnet und vorzugsweise, wie in der Figur 7 dargestellt, einstückig miteinander ausgebildet.

Insgesamt bietet die vorteilhafte Abgasnachbehandlungseinrichtung 1 den Vorteil, dass das Auftreffen von Tropfen des Abgasnachbehandlungsmittels auf die Rohrwand gegenüber der Einspritzeinrichtung 7 vermieden und die Verdampfung und das Aufbrechen der Tropfen verbessert wird. Durch die besondere Ausrichtung der Luftleitelemente 14 in der Ebene E senkrecht zur Einspritzrichtung wird dabei trotz verbesserter Mischungseigenschaften der Druckverlust des Mischers reduziert. Hierdurch ergibt sich ein weiterer Vorteil gegenüber herkömmlichen Mischvorrichtungen, bei denen der Druckverlust mit der Vermischung zunimmt. Durch die Orientierung der Luftleitelemente 14 senkrecht zur Einspritzrichtung der Einspritzeinrichtung 7 wird die Fläche, welche durch die Projektion der Luftleitelemente in der Ebene senkrecht zur Abgasrohrachse 9 entsteht, gegenüber konventionellen Mischern verringert. Dies führt zu einer Verringerung des durch die Mischvorrichtung induzierten Gegendrucks bei gleichzeitig verbesserten Vermischungseigenschaften.

## Patentansprüche

1. Einrichtung (1), insbesondere Abgasnachbehandlungseinrichtung (1), mit einem Rohr (2), insbesondere Abgasrohr, durch welches ein Gasstrom, insbesondere Abgas einer Brennkraftmaschine, geführt wird, mit einer dem Rohr zugeordneten Einspritzeinrichtung (7) zum dosierten Einspritzen eines flüssigen Mediums, insbesondere Abgasnachbehandlungsmittel, in den Gasstrom, wobei die Einspritzeinrichtung (7) an einer Mantelwand (4) des Rohrs (2) derart angeordnet ist, dass eine Einspritzrichtung der Einspritzeinrichtung (7) schräg bezüglich der Längsachse des Rohrs (2) ausgerichtet ist, und mit mindestens einer Mischvorrichtung (11), die stromabwärts der Einspritzeinrichtung (7) in dem Rohr (2) angeordnet ist, und die mehrere in einer Ebene (E) angeordnete, flügelartig ausgebildete Luftleitelemente (14) aufweist, **dadurch gekennzeichnet, dass** die Luftleitelemente (14) zumindest radial ausgerichtet über den Umfang des Rohrs (2) in dem Rohr (2) verteilt angeordnet sind, wobei die Ebene (E) zumindest im Wesentlichen senkrecht zu der Einspritzrichtung der Einspritzeinrichtung (7) ausgerichtet ist.

2. Abgasnachbehandlungseinrichtung nach einem der vorhergehenden Ansprüche, **dadurch gekennzeichnet, dass** die Luftleitelemente (14) zumindest im Wesentlichen schräg bezüglich der Strömungsrichtung des Gasstroms in dem Rohr (2) stromaufwärts der Mischvorrichtung (11) ausgerichtet sind.

3. Abgasnachbehandlungseinrichtung nach einem der vorhergehenden Ansprüche, **dadurch gekennzeichnet, dass** die Luftleitelemente (14) entlang ihrer jeweiligen zumindest im Wesentlichen radial ausgerichteten Längsachse in sich verwunden sind.

4. Abgasnachbehandlungseinrichtung nach einem der vorhergehenden Ansprüche, **dadurch gekennzeichnet, dass** die Luftleitelemente (14) einen radialen Abstand zu einer Mantelwand (4) des Rohrs (2) aufweisen.

5. Abgasnachbehandlungseinrichtung nach einem der vorhergehenden Ansprüche, **dadurch gekennzeichnet, dass** die Luftleitelemente (14) an einem mittig in dem Rohr (2) angeordneten Stützelement (17) angeordnet sind.

6. Abgasnachbehandlungseinrichtung nach Anspruch 5, **dadurch gekennzeichnet, dass** das Stützelement (17) als Rohrelement (12) ausgebildet ist, an dem die Luftleitelemente (14) radial nach innen ragend angeordnet sind.

7. Abgasnachbehandlungseinrichtung nach Anspruch 5, **dadurch gekennzeichnet, dass** das Stützelement als Rohrelement (12) ausgebildet ist, an dem die Luftleitelemente (14) radial nach außen in Richtung der Mantelwand (4) des Rohrs (2) weisend angeordnet sind.

8. Abgasnachbehandlungseinrichtung nach Anspruch 6 oder 7, **dadurch gekennzeichnet, dass** die Luftleitelemente (14) einstückig mit dem Rohrelement (12) ausgebildet sind.

9. Abgasnachbehandlungseinrichtung nach einem der vorhergehenden Ansprüche, **dadurch gekennzeichnet, dass** wenigstens zwei Mischvorrichtungen (11) in dem Rohr (2) in Strömungsrichtung hintereinander liegend angeordnet sind.

## Claims

1. Device (1), in particular exhaust gas aftertreatment device (1), with a pipe (2), in particular exhaust pipe, through which a gas flow, in particular exhaust gas of an internal combustion engine, is guided, with an injection device (7) which is assigned to the pipe and is intended for the metered injection of a liquid medium, in particular exhaust gas aftertreatment means, into the gas flow, wherein the injection device (7) is arranged on a circumferential wall (4) of the pipe (2) in such a manner that an injection direction of the injection device (7) is oriented obliquely with respect to the longitudinal axis of the pipe (2), and with at least one mixing apparatus (11) which is arranged in the pipe (2) downstream of the injection device (7) and which has a plurality of air-guiding elements (14) which are arranged in a plane (E) and are designed in the manner of wings, **characterized in that** the air-guiding elements (14) are arranged in the pipe (2) distributed in an at least radially oriented manner over the circumference of the pipe (2), wherein the plane (E) is oriented at least substantially perpendicularly to the injection direction of the injection device (7).

2. Exhaust gas aftertreatment device according to one of the preceding claims, **characterized in that** the air-guiding elements (14) are oriented at least substantially obliquely with respect to the direction of flow of the gas flow in the pipe (2) upstream of the mixing apparatus (11).

3. Exhaust gas aftertreatment device according to either of the preceding claims, **characterized in that** the air-guiding elements (14) are twisted on themselves along their respective longitudinal axis which is oriented at least substantially radially.

4. Exhaust gas aftertreatment device according to one of the preceding claims, **characterized in that** the air-guiding elements (14) are at a radial distance from a circumferential wall (4) of the pipe (2).

5. Exhaust gas aftertreatment device according to one of the preceding claims, **characterized in that** the air-guiding elements (14) are arranged on a support element (17) arranged centrally in the pipe (2).

6. Exhaust gas aftertreatment device according to Claim 5, **characterized in that** the support element (17) is designed as a pipe element (12) on which the air-guiding elements (14) are arranged in a manner projecting radially inwards.

7. Exhaust gas aftertreatment device according to Claim 5, **characterized in that** the support element is designed as a pipe element (12) on which the air-guiding elements (14) are arranged pointing radially outwards in the direction of the circumferential wall (4) of the pipe (2).

8. Exhaust gas aftertreatment device according to Claim 6 or 7, **characterized in that** the air-guiding elements (14) are formed integrally with the pipe element (12).

9. Exhaust gas aftertreatment device according to one of the preceding claims, **characterized in that** at least two mixing apparatuses (11) are arranged in the pipe (2) in a manner lying one behind another in the direction of flow.

## Revendications

1. Dispositif (1), en particulier dispositif de post-traitement de gaz d'échappement (1), comprenant un tuyau (2), en particulier un tuyau d'échappement, à travers lequel est guidé un flux de gaz, en particulier un gaz d'échappement d'un moteur à combustion interne, comprenant un dispositif d'injection (7) associé au tuyau pour l'injection dosée d'un agent fluide, en particulier d'un agent de post-traitement de gaz d'échappement, dans le flux de gaz, le dispositif d'injection (7) étant disposé au niveau d'une paroi d'enveloppe (4) du tuyau (2) de telle sorte qu'une direction d'injection du dispositif d'injection (7) soit orientée obliquement par rapport à l'axe longitudinal du tuyau (2), et comprenant au moins un dispositif de mélange (11) qui est disposé en aval du dispositif d'injection (7) dans le tuyau (2), et qui présente plusieurs éléments de guidage d'air (14) disposés dans un plan (E), réalisés sous forme d'ailes, **caractérisé en ce que** les éléments de guidage d'air (14) sont disposés de manière répartie dans le tuyau (2) au moins suivant une orientation radiale sur la périphérie du tuyau (2), le plan (E) étant orienté au moins essentiellement perpendiculairement à la direction d'injection du dispositif d'injection (7).

2. Dispositif de post-traitement de gaz d'échappement selon l'une quelconque des revendications précédentes, **caractérisé en ce que** les éléments de guidage d'air (14) sont orientés au moins essentiellement obliquement par rapport à la direction d'écoulement du flux de gaz dans le tuyau (2) en amont du dispositif de mélange (11).

3. Dispositif de post-traitement de gaz d'échappement selon l'une quelconque des revendications précédentes, **caractérisé en ce que** les éléments de guidage d'air (14) sont vrillés sur eux-mêmes le long de leur axe longitudinal respectif orienté au moins essentiellement radialement.

4. Dispositif de post-traitement de gaz d'échappement selon l'une quelconque des revendications précédentes, **caractérisé en ce que** les éléments de guidage d'air (14) présentent une distance radiale à une paroi d'enveloppe (4) du tuyau (2).

5. Dispositif de post-traitement de gaz d'échappement selon l'une quelconque des revendications précédentes, **caractérisé en ce que** les éléments de guidage d'air (14) sont disposés sur un élément de support (17) disposé centralement dans le tuyau (2) .

6. Dispositif de post-traitement de gaz d'échappement selon la revendication 5, **caractérisé en ce que** l'élément de support (17) est réalisé sous forme d'élément tubulaire (12) sur lequel les éléments de guidage d'air (14) sont disposés de manière à faire saillie radialement vers l'intérieur.

7. Dispositif de post-traitement de gaz d'échappement selon la revendication 5, **caractérisé en ce que** l'élément de support est réalisé sous forme d'élément tubulaire (12) sur lequel les éléments de guidage d'air (14) sont disposés de manière tournée radialement vers l'extérieur dans la direction de la paroi d'enveloppe (4) du tuyau (2) .

8. Dispositif de post-traitement de gaz d'échappement selon la revendication 6 ou 7, **caractérisé en ce que** les éléments de guidage d'air (14) sont réalisés d'une seule pièce avec l'élément tubulaire (12).

9. Dispositif de post-traitement de gaz d'échappement selon l'une quelconque des revendications précédentes, **caractérisé en ce qu'**au moins deux dispositifs de mélange (11) sont disposés dans le tuyau (2) en étant situés l'un derrière l'autre dans le sens de l'écoulement.
